# FASCICULE DE BREVET EUROPEEN

(11) **EP 1 200 006 B1**
(45) Date de publication et mention de la délivrance du brevet: **03.10.2007**
(21) Numéro de dépôt: 00949563.1
(22) Date de dépôt: 28.06.2000
(51) Int. Cl.: A61C 8/00

(54) **DISPOSITIF POUR LA MISE EN PLACE D'IMPLANT DENTAIRE**
VORRICHTUNG ZUM EINBRINGEN EINES ZAHNIMPLANTATES
DEVICE FOR FIXING A DENTAL IMPLANT

(30) Priorité: 06.08.1999 FR 9910375
(43) Date de publication de la demande: 02.05.2002
(73) Titulaire: Hure, Guy, 75008 Paris (FR)
(72) Inventeur: Hure, Guy, 75008 Paris (FR)
(74) Mandataire: Habasque, Etienne J. Jean-François
(86) Numéro de dépôt international: PCT/FR2000/001807
(87) Numéro de publication internationale: WO 2001/010333

(56) Documents cités:
- DE-A- 1 566 223
- FR-A- 2 272 636
- US-A- 5 542 847

## Description

La présente invention concerne le matériel de chirurgie dentaire, plus particulièrement le matériel de mise en place d'implants dentaires, et principalement le dispositif spécialement conçu pour mettre en place un implant dentaire devant être immobilisé par des clavettes dans l'os maxillaire.

Un tel dispositif est décrit dans le brevet français 9406593.

Dans cette demande sont décrits, d'une part, un implant qui prend appui sur la corticale supérieure du maxillaire ainsi que sur les corticales latérales par des clavettes et d'autre part, un appareillage particulier de mise en place.

En ce qui concerne l'implant, son corps est percé d'alésages sensiblement transversaux à son axe par lesquels sont passées une ou plusieurs clavettes cylindriques. Ces clavettes sont introduites dans le maxillaire par des trous préalablement forés dans cet os traversant l'implant par les alésages.

Ces clavettes, tout en procurant des appuis supplémentaires dans les corticales latérales, immobilisent l'implant en rotation autour de son axe. En d'autres termes, l'implant ne peut subir de pivotement sur lui-même et son maintien dans l'os est renforcé considérablement.

En ce qui concerne l'appareillage de mise en place, il comporte un organe de positionnement conçu pour être fixé sur le corps de l'implant avec une position particulièrement précise par rapport aux alésages. Cet organe de positionnement supporte un gabarit de perçage qui guide, par rapport au corps de l'implant, le foret lors du perçage des trous réservés aux clavettes.

Des gabarits de perçage sont déjà connus dans les brevets US 5,542,847 ou FR 2 272 636. Des gabarits de perçage sont également connus, par exemple dans le brevet US 3.981.079. Ils ne permettent pas une bonne adaptation aux variations anatomiques de la mâchoire, ni une mise en place axialement précise des moyens de fixations.

Le gabarit du brevet français 94 06593 remédie en partie à ces inconvénients. Il est cependant encombrant lors de sa mise en place et de son éventuel changement de position, par exemple si l'implant reçoit plusieurs clavettes de fixation à des niveaux différents.

Un but de l'invention est de remédier à ces inconvénients.

L'invention a pour objet un gabarit de perçage pour implant dentaire muni d'un organe de positionnement, notamment implant possédant au moins un alésage destiné à recevoir une clavette, ledit gabarit ayant des moyens de fixation dans une position précise sur un tel organe de positionnement, au moins un canal cylindrique de guidage de clavette, et des moyens de positionnement axial dudit canal par rapport à une paroi osseuse recevant une clavette d'implant, lesdits moyens de positionnement axial comportant au moins une pièce allongée ou douille, de longueur définie, dont la paroi interne forme le dit canal et mobile le long de son axe dans un corps de gabarit, le corps de gabarit possédant une partie verticale fixe extérieure à la gencive et présentant au moins un trou de guidage de la pièce allongée ou douille de sorte que ladite pièce allongée ou douille est guidée pour pouvoir être amenée par une extrémité spécialement adaptée au contact de la paroi osseuse, le dit moyen de positionnement axial possédant un bouton servant de butée pour un porte clavette dans une position telle qu'en position de butée la clavette est exactement enfoncée dans la paroi osseuse quand ladite extrémité est à son contact, le corps de gabarit ayant une forme en Z.

De préférence le canal cylindrique forme également guide d'outil de perçage.

Selon un mode de réalisation actuellement préféré, l'organe de positionnement est réalisé sous la forme d'un tube d'axe rectiligne, ouvert aux deux extrémités. Il comporte une partie d'extrémité ayant une section droite conformée et dimensionnée pour s'ajuster dans un évidement axial de section correspondante, ouvert vers le haut, ménagé dans le corps de l'implant. Ladite partie d'extrémité comporte sur l'une de ses faces un relief, saillie ou évidement destinée à coopérer avec le relief, évidemment (ou saillie) de forme correspondante prévue dans la paroi de l'évidemment du corps de l'implant, Cette dernière disposition joue le rôle de « détrompeur », évitant toute erreur de positionnement angulaire entre le tube de positionnement et le corps de l'implant.

Dans son évidemment, le tube de positionnement présente une surface conique d'appui pour la tête fraisée d'une vis dont le fût fileté dépasse l'extérieur du tube, à l'extrémité comportant, par exemple une partie polygonale. Ce fût fileté est destiné à visser dans un alésage axial borgne taraudé correspondant ménagé dans le corps de l'implant à la suite dudit évidemment de section polygonale.

Toujours selon un mode de réalisation préféré, l'organe tubulaire de positionnement présente une fente latérale verticale. Trou et fente de l'organe de positionnement sont destinés à recevoir, sans jeu, les éléments correspondants du gabarit de perçage. Lorsque ce dernier est en place dans l'organe de positionnement, le praticien peut l'immobiliser par un blocage mécanique, par exemple une vis.

Les éléments mâles du gabarit de perçage, à savoir cylindre et lame, qui se placent dans l'organe de positionnement, sont prolongés à leur périphérie par une partie plate dont le profil est découpé en Z.
La partie supérieure plate est attenante au cylindre et à la lame verticale qui s'insèrent dans l'organe de positionnement. La partie verticale est percée dans sa région inférieure de trous dont le nombre correspond de préférence au nombre de clavettes que compte l'implant utilisé et dont les axes correspondent, avec précision, aux axes de ces trous. Dans chaque trou on peut faire coulisser une douille de guidage de longueur bien défini, ayant une extrémité fine et conique, qui peut venir au contact de l'os. Le chirurgien fait passer cette douille dans le trou correspondant à la clavette qu'il met en place. Le corps de cette douille de guidage faisant suite à cette partie conique est tubulaire dans le but de servir de guide à différents instruments détaillés ci-aprés. Pour faciliter l'introduction de ces instruments la suite du corps de la douille est ouverte pour que le chirurgien puisse les déposer tour à tour selon le besoin. La douille est de longueur suffisante pour que l'introduction de ces instruments se fasse hors de la bouche du patient.

Dans une suite d'opérations telle qu'elle est de préférence adoptée, une fois l'implant déposé dans sa cavité creusée dans l'os maxillaire, il peut être orienté en faisant pivoter le gabarit de perçage et donc l'implant par rapport aux dents. Le choix de son orientation angulaire est laissé à l'appréciation du praticien. Lorsqu'il s'est déterminé et qu'il va procéder à la perforation du premier trou logement de clavette, il incise la gencive en passant un trocart à l'intérieur de la douille, puis fait coulisser la douille le long du trocart jusqu'au contact de l'os. La petite plaie laissée par le trocart est minime et sa cicatrisation est très rapide. Le foret est déposé dans la douille à la place du trocart, et il est guidé par la douille. La douille sert aussi à mettre en place la clavette. Celle-ci présente à une extrémité un trou borgne fileté, dans lequel se visse un porte-claverte. L'ensemble clavette et porte-clavette prend la place du foret, la perforation de l'os étant achevée. La clavette est impactée en utilisant un petit maillet chirurgical pour frapper sur le porte-clavette.

La clavette étant en place, elle est libérée du porte-clavette par dévissage.

Une fois la première clavette posée, la douille coulissante est passée dans un deuxième trou du gabarit de perçage pour la réalisation d'un deuxième trou dans l'os, à moins qu'une deuxième douille ne soit prévue.

L'obtention d'un contact entre la douille et l'os de la mâchoire apporte une grande précision pour le forage des trous, la mise en place des clavettes et comme il est expliqué plus loin, cela permet la mesure aisée de la longueur des trous forés dans l'os.

Le fait que le gabarit de perçage soit constitué de deux éléments, à savoir, le corps du gabarit et la douille coulissante, fait que le praticien n'a pas à retirer le gabarit de l'organe de positionnement pour le replacer dans une autre position pour réaliser un deuxième trou dans l'os, comme c'est le cas dans le gabarit décrit dans le brevet français 94/06593. Seule la douille est déplacée, ce qui est beaucoup plus aisé et rapide. Pour autant cette configuration permet le réglage du gabarit en fonction de l'épaisseur de l'os contrairement au guide décrit dans le brevet US 3-981-079.

Afin de permettre au praticien de s'adapter à la morphologie de son patient, il est avantageux de mettre à sa disposition un jeu de plusieurs clavettes de même dimension et forme, mais de longueurs différentes. Le praticien pourra ainsi choisir parmi ces clavettes celle dont la longueur correspond sensiblement à la longueur du ou des trous forés dans l'os. La mesure de cette longueur peut être effectuée à partir de divisions portées sur un outil, par exemple l'outil de perçage, en se référant à un repère situé sur la douille coulissante.

Il peut être parfois indispensable de retirer une ou plusieurs clavettes mises en place. Dans ces conditions, le gabarit étant en place sur le porte-implant, le praticien revisse le porte-clavette dans la clavette puis exerce sur lui une traction fournie par un système générateur d'une force d'écartement, un vérin à vis, par exemple, qui s'arc-boute entre la partie arrière de la douille et le bouton terminant le porte-clavette.

Dans une réalisation préférée, le gabarit est agencé pour que la douille puisse pivoter autour d'un point situé vers sa partie postérieure, pour pouvoir être, au choix, insérée par sa partie antérieure dans l'un des trous du corps de gabarit. Dans ce cas les passages ou alésages de l'implant ont des axes inclinés qui convergent au point de basculement. Ceci permet, notamment, d'utiliser une seule douille que l'on ne recule que sur une courte distance pour passer d'un trou à l'autre.

A cette fin la partie plate du corps de gabarit a un profil, découpé en Z dont la partie verticale, percée de trous, se prolonge par une partie inférieure creusée d'une goulette guidant la douille et permettant son pivotement.

Dans une autre réalisation, qui permet d'avoir des trous parallèles, il est nécessaire, soit d'avoir une douille par trou, soir de retirer la douille d'un trou, pour l'enfoncer dans un autre trou, sachant que les trous doivent être suffisamment longs, pour assurer, à eux seuls, un parfait guidage de la douille.

On peut, éventuellement, prévoir des moyens de réglage en hauteur, c'est-à-dire verticalement, de la position du gabarit sur la pièce de positionnement, par exemple par interposition ou retrait d'une cale amovible. Ceci permet au corps de gabarit de n'avoir qu'un nombre limité de trous, par exemple un seul, ou deux, tout en pouvant aligner le gabarit avec un ou des alésages supplémentaires de l'implant, en modifiant la position verticale du gabarit.

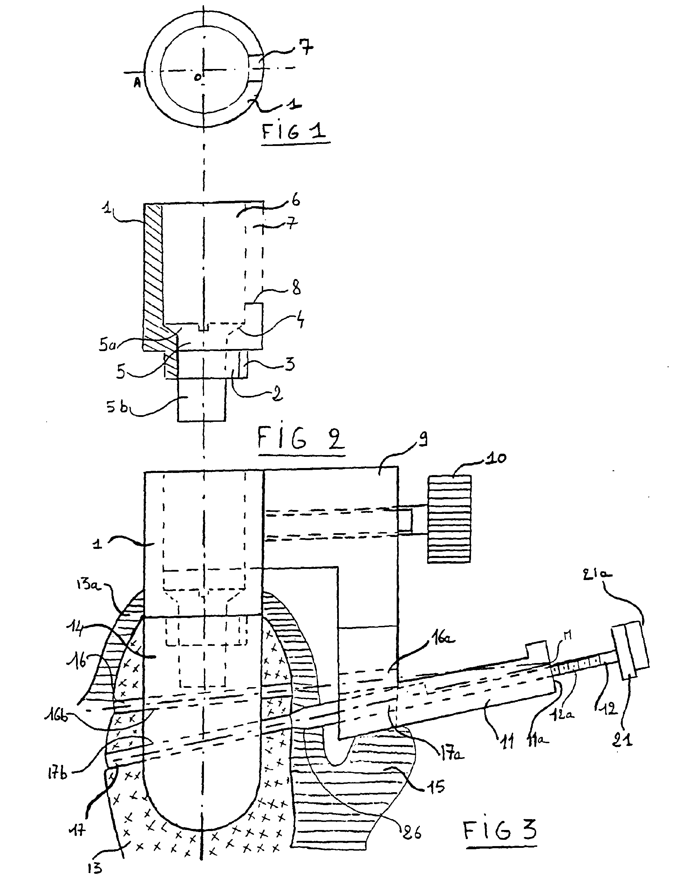

D'autres avantages et caractéristiques de l'invention ressortiront à la lecture de la description qui va suivre et écrite en référence aux dessins annexés dans lesquels :
- la figure 1 est une vue de dessus de l'organe de positionnement.
- la figure 2 est une vue en élévation et une coupe verticale selon le plan A0 de la figure 1.
- la figure 3 est une vue en élévation d'un implant en cours de fixation dans un os maxillaire représenté en coupe avec la gencive qui le recouvre. L'implant supporte l'organe de positionnement lequel est assujetti au gabarit de perçage dans lequel est en place la douille coulissante.
- la figure 4 est une vue de la douille.
- la figure 5 est une vue en perspective d'un os maxillaire portant un implant immobilisé par 3 clavettes ; il supporte l'organe de positionnement et le gabarit de perçage.
- la figure 7 donne une vue de la clavette réalisée selon l'invention.
- la figure 8 est une vue de l'instrument extracteur de clavette.
- La figure 9 est une vue en élévation selon une variante du dispositif. Un outil de perçage est présent dans la douille coulissante.
Le tube de positionnement (1) des figures 1 et 2 est de forme cylindrique de section circulaire, et ouvert à ses deux extrémités. Le tube (1) comporte une partie d'extrémité (2) ayant une section droite polygonale régulière, cette partie étant conformée et dimensionnée pour s'ajuster dans l'évidemment axial de section polygonale correspondante ménagée dans le corps d'implant (14).
La partie d'extrémité (2) comporte sur l'une de ses faces une nervure (3) destinée à s'engager dans la rainure de forme correspondante du corps d'implant (14). Cette coopération permet un repérage de la position angulaire de la pièce (1) par rapport au corps (14), réalisant ainsi un détrompeur permettant d'éviter tout erreur de positionnement angulaire entre le tube de positionnement (1) et le corps d'implant (14). La paroi interne du tube de positionnement (1) présente une surface d'appui conique (4) pour la tête fraisée (5a) d'une vis (5) dont le fût fileté (5b) dépasse vers le bas à l'extérieur du tube (1), à l'extrémité comportant la partie polygonale (2). Ce fût fileté (5b) est destiné à se visser dans l'alésage axial borgne taraudé ménagé dans le corps d'implant (14) à la suite de l'évidemment de section polygonale.

Le tube de positionnement (1) en plus de son trou axial vertical (6) présente une fente verticale (7). Trou (6) et fente (7) sont destinés à recevoir sans jeu les éléments correspondant du gabarit de perçage par coulissement en direction axiale de l'implant. Celui-ci est enfoncé jusqu'à la butée (8).

En se référant à la figure 3 on voit le tube de positionnement des figures 1 et 2 vissé dans un implant (14) en cours d'immobilisation dans un os maxillaire (13) recouvert de la gencive (13a). Les éléments du tube de positionnement, la nervure (3), la partie polygonale (2) et la partie fileté (5a) de la vis (5) ont pris place dans l'implant. Le tube de positionnement reste hors de l'os. La fente (7) est dans le même plan que les trous transversaux (16b) et (17b) du corps de l'implant (14), et sert de repère d'orientation au chirurgien. La partie du gabarit de perçage (9) qui fait suite au cylindre et à la lame verticale qui rentrent dans l'organe de positionnement, comprend une vis de blocage (10). Cette vis de blocage évite le risque de remontée du gabarit de perçage dans l'organe de positionnement. Il est préférable que la butée (8) soit située à une hauteur suffisante de l'implant pour que la mise en place du gabarit de perçage ne soit pas génée par la gencive, si un décollement de cette dernière n'a pas été effectué, ou par un éventuel relief osseux.

Dans le bas de la partie verticale (19) du gabarit sont présents deux trous (16a) et (17a) dans les axes des trous transversaux (16b) et (17b) du corps de l'implant (14) ; la partie horizontale de ce gabarit étant la goulette (11) qui, comme on le voit, et compte tenu de sa longueur, sert d'écarteur à la lèvre (15) ou à la joue du patient pour faciliter l'observation du site tout en supportant la douille (12) terminée respectivement à ses deux extrémités par le bouton (21) et le cône (26). Avant de procéder au perçage des trous pour les clavettes (16) et (17), le chirurgien peut faire le choix du meilleur angle en faisant pivoter l'ensemble implant, tube de positionnement et gabarit autour de son axe vertical. Il peut ainsi apprécier l'épaisseur de l'os à traverser jusqu'à l'implant en maintenant le contact du cône (26) avec l'os (13), une indication lui étant fourni par les divisions (12a) portées sur la douille en se référant à un repère situé sur la goulette (11), le bord extérieur (11a) par exemple. Il est à noter que les axes des clavettes (16) et (17) convergent vers le point M à l'arrière de la goulette (11). La figure (4) représente en coupe la douille (12). C'est un tube métallique (20) dont l'extrémité est fine et taillée suivant un cône (26). Fait suite à cette partie (20) une partie (22) ouverte suivant l'axe et terminée par le bouton (21).
- La figure 5 représente le porte-clavette (23) simple tige métallique portant le bouton (24) et qui est vissée dans la clavette (25).

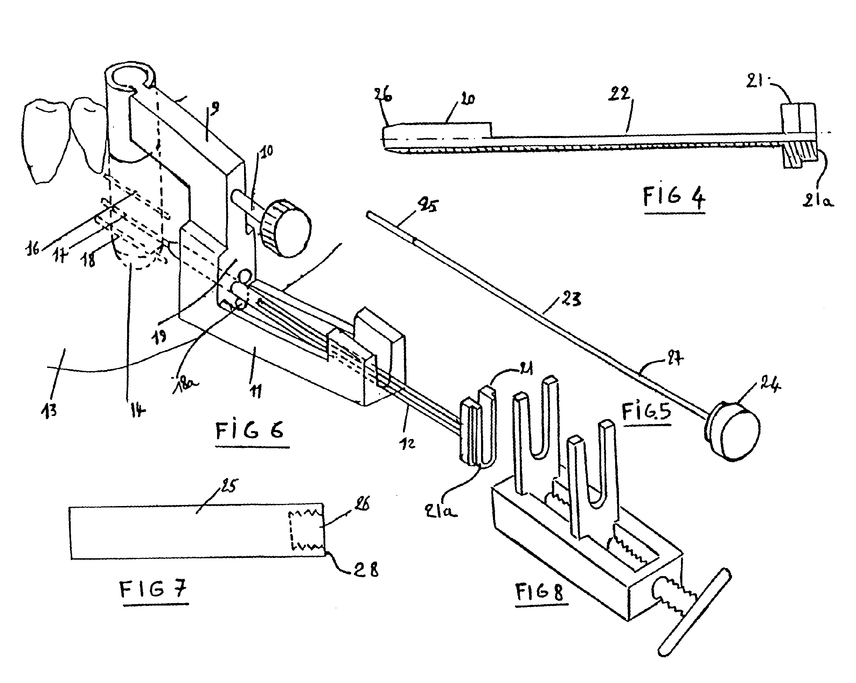

- La figure 6 représente une vue schématique et partielle d'un os maxillaire (13) dans lequel a été placé l'implant (14) sur lequel est vissé l'organe de positionnement (1) dans lequel est introduit le gabarit de perçage. Dans cette configuration, l'implant (14) a reçu 3 clavettes (16), (17) et (18) ; les clavettes (16) et (17) sont celles de la figure 3 dont il a été précisé que leurs axes étaient convergents au point M. Cette disposition donne à l'opérateur la facilité de passer la douille coulissante d'un trou à un autre (16a, 17a ou 18a) sans avoir à la retirer totalement du gabarit. Le point M constitue le centre de rotation de la douille. Dans le dessin de la figure 6 l'orifice d'un troisième trou est visible, il correspond à la clavette (18) dont l'axe passe aussi par M. Dans la goulette (11) a pris place la douille (12) ouverte sur le dessus pour recevoir le porte-clavette (23).

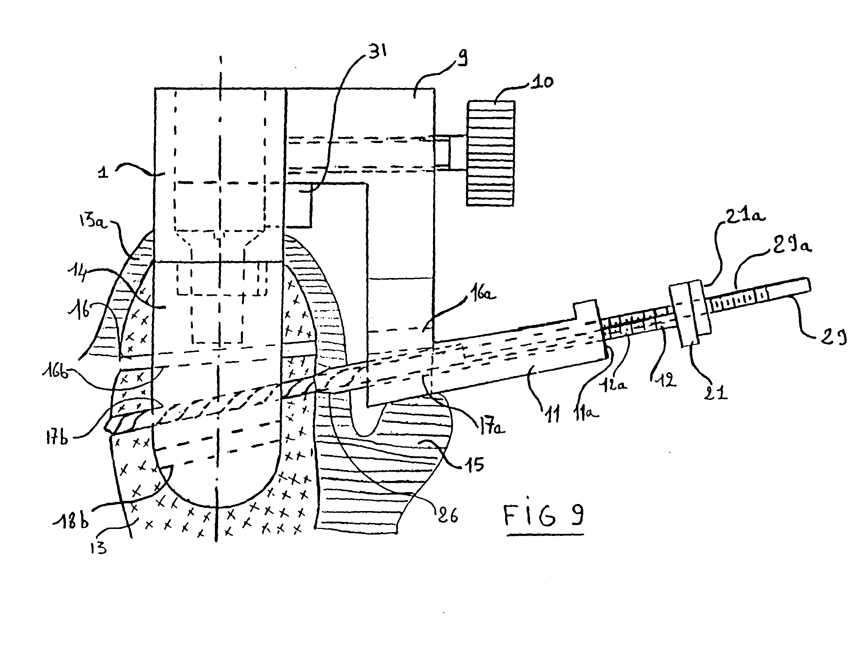

- Sur la figure 7 est représentée grossie, pour mieux en montrer le détail la clavette (25) dont l'une des extrémités comporte un trou borgne fileté (26) d'axe identique à celui de la clavette, afin de pouvoir y visser le porte-clavette (23).

L'ensemble porte-clavette et clavette est introduit dans la douille et la clavette est impactée dans l'implant (14). Son passage dans l'alésage peut être facilité en donnant quelques légers coups de maillet chirurgical sur la tête (24). La longueur de la tige (27) du porte-clavette (23) étant égale à celle de la douille, une fois la tête (24) au contact de l'extrémité (21) de la douille, le praticien est sur que l'extrémité (28) de la clavette se trouve au raz de l'os, puisque l'extrémité conique (26) de la douille s'y trouve également. Si par besoin cette clavette doit être retirée il dispose d'un extracteur de clavette, un petit vérin à vis (30), par exemple, représenté figure 8, qui prenant appui sur le bouton (21) d'une part et sur le bouton (24) d'autre part, écarte les deux outils et retire la clavette de son logement. La forme des boutons (21) et (24) permet la mise en place aisée de cet extracteur de clavette.

La figure 9 représente une variante, du dispositif. L'implant (14) possède un troisième alésage (18b) parallèle au deuxième alésage (17b). Le gabarit de perçage est réglé verticalement, pour la réalisation du trou osseux passant par cet alésage (18b), en retirant de la fente (7) de l'organe de positionnement (1) la cale (31). Sur cette figure est également représenté l'outil de perçage (29) guidé par la douille (12), le trou osseux terminé. Le praticien peut évaluer précisément l'épaisseur de l'os traversé à partir des divisions (29a) portées sur l'outil de perçage en se référant à un repère situé sur la douille (12), son bord extérieur (21a) par exemple.

Le guide de l'invention peut convenir à tous les types de clavettes, quelle que soit leur forme.

## Revendications

1. Gabarit de perçage pour implant dentaire muni d'un organe de positionnement (1), notamment pour un implant (14) possédant au moins un alésage (16b,17b,18b) destiné à recevoir une clavette (16,17,18), ledit gabarit ayant des moyens de fixation dans une position précise sur un tel organe de positionnement, au moins un canal cylindrique de guidage de clavette, et des moyens de positionnement axial dudit canal par rapport à une paroi osseuse recevant une clavette d'implant (16,17), lesdits moyens de positionnement axial comportant au moins une pièce allongée ou douille (12), de longueur définie, dont la paroi interne forme le dit canal et mobile le long de son axe dans un corps de gabarit (9), le corps de gabarit possédant une partie verticale fixe (19) extérieure à la gencive et présentant au moins un trou de guidage (16a, 17a,18a) de la pièce allongée ou douille (12) de sorte que ladite pièce allongée ou douille est guidée pour pouvoir être amenée par une extrémité (26) spécialement adaptée, au contact de la paroi osseuse **caractérisé en ce que** ledit moyen de positionnement axial (12) possède un bouton (21) servant de butée pour un porte-clavette (23) dans une position telle qu'en position de butée la clavette est exactement enfoncée dans la paroi osseuse quand ladite extrémité (26) est à son contact et **en ce que** le corps de gabarit (9) a une forme plate en Z.

2. Gabarit selon la revendication 1, **caractérisé en ce que** le canal cylindrique forme également guide d'outil de perçage.

3. Gabarit selon la revendication 1 ou la revendication 2, **caractérisé en ce que** ladite extrémité (26) est conique.

4. Gabarit selon l'une des revendications 1 à 3, **caractérisé en ce que** ladite pièce allongée (12) possède un canal de guidage ouvert latéralement sur une partie de sa longueur.

5. Gabarit selon l'une des revendications 1 à 4, **caractérisé en ce que** le canal cylindrique forme également guide pour un trocart qui incise la gencive pour pouvoir faire passer la pièce allongée (12) au travers de la gencive jusqu'au contact de l'os.

6. Gabarit selon l'une des revendications 1 à 5, **caractérisé en ce que** la dite pièce allongée (12) possède une longueur suffisante pour que l'introduction des différents instruments qu'elle guide se fasse hors de la bouche du patient.

7. Gabarit selon l'une des revendications 1 à 6, **caractérisé en ce que** la pièce allongée (12) possède des divisions (12a) permettant d'apprécier l'épaisseur de l'os à traverser jusqu'au corps d'implant (14) en se référant à un repère (11a) du gabarit.

8. Gabarit selon l'une des revendications 1 à 7, **caractérisé en ce que** la pièce allongée (12) possède un repère (21a) servant de référence pour mesurer l'épaisseur de l'os traversé par un outil, par exemple l'outil de perçage (29), à partir des divisions (29a) portées sur cet outil.

9. Gabarit selon la revendication 1, **caractérisé en ce que** ladite butée (21) est formée par une extrémité de ladite pièce allongée (12).

10. Gabarit selon l'une des revendications 1 à 9, **caractérisé par** des moyens de mise en place du corps de gabarit (9) sur l'organe de positionnement (1) par coulissement en direction axiale de l'implant.

11. Gabarit selon l'une des revendications 1 à 10, **caractérisé en ce qu'**il possède des moyens de réglage de la position dudit canal dans un plan vertical de l'implant pour aligner ledit canal avec au moins deux passages ou alésages d'implant situés à des niveaux différents.

12. Gabarit selon la revendication 11, **caractérisé en ce que** ladite pièce allongée (12) est agencée pour basculer autour d'un point fixe (M) du corps de gabarit (9) éloigné de la paroi osseuse puis enfoncée dans l'un ou l'autre d'au moins deux passages (16a,17a,18a) du corps du gabarit inclinés l'un par rapport à l'autre et respectivement alignés avec les alésages correspondant d'implant.

13. Gabarit selon l'une des revendications 1 à 12 **caractérisé en ce que** la partie inférieure (11) sert d'écarteur pour écarter la lèvre ou la joue du patient.

14. Gabarit selon la revendication 10, **caractérisé en ce qu'**il comporte trois passages (16a,17a,18a) de corps de gabarit.

15. Gabarit selon l'une des revendications 1 à 14, **caractérisé en ce que** le corps de gabarit (9) possède une forme plate en Z avec une partie supérieure présentant les moyens de mise en place et fixation sur un organe de positionnement (1), une partie intermédiaire verticale (19) présentant au moins un passage de guidage (16a,17a) de pièce allongée (12) et une partie inférieure (11) présentant un point de basculement (M) de pièce allongée.

16. Gabarit selon l'une des revendications 1 à 15, **caractérisé en ce qu'**il coopère avec un organe de positionnement (1) pour pouvoir être réglé dans plusieurs positions dans le plan vertical de façon à amener ledit canal de pièce allongée (12) en alignement successif avec plusieurs alésages d'implant (16b, 17b, 18b) situés à des niveaux différents.

17. Gabarit selon la revendication 16, **caractérisé en ce qu'**il coopère avec une cale (31) pour son réglage sur l'organe de positionnement.

18. Gabarit selon l'une des revendications 1 à 17, **caractérisé en ce que**, pour sa mise en place sur l'organe de positionnement, il possède un moyen reçu sans jeu dans un trou axial (6) et dans une fente latérale (7) de l'organe de positionnement.

19. Gabarit selon l'une des revendications 1 à 18, **caractérisé en ce que** les moyens de fixation sur l'organe de positionnement (1) sont situés à distance de l'os.

20. Gabarit selon l'une des revendications 1 à 19, **caractérisé en ce que** les moyens de fixation sur l'organe de positionnement comportent un système de blocage (10), une vis par exemple.

21. Gabarit selon l'une des revendications 1 à 20, **caractérisé en ce qu'**il coopère avec un organe de positionnement (1) fixé au sommet de l'implant (14) dans une position angulaire bien précise.

22. Ensemble pour la mise en place d'un implant dentaire comprenant un gabarit selon l'une des revendications 1 à 21 et un porte clavette (23) **caractérisé en ce que** le porte clavette comporte une tige allongée (27) présentant à une extrémité antérieure, un moyen de fixation provisoire à l'arrière d'une clavette (25), et muni d'un moyen de butée (24) pouvant coopérer avec une butée (21) du moyen de positionnement axial du gabarit pour un positionnement axial exact de la clavette.

23. Ensemble pour la mise en place d'un implant dentaire selon la revendication 22, **caractérisé en ce que** l'extrémité antérieure du porte-clavette (23) peut être vissée dans une extrémité taraudée (26) de clavette.

24. Ensemble, selon l'une des revendications 22 à 23, **caractérisé en ce que** le porte-clavette peut être rendu solidaire, provisoirement, en rotation, de la clavette, lorsque celle-ci présente un filetage destiné à être vissé dans un taraudage de l'implant.

25. Ensemble pour la mise en place d'un implant dentaire comprenant un gabarit et un porte clavette selon l'une des revendications 1 à 24, et un extracteur à clavette (30), **caractérisé en ce qu'**il comporte au moins un générateur d'une force d'écartement du moyen de butée (21), du moyen (12) de positionnement axial du gabarit et du moyen de butée (24) du porte clavette (23), par exemple un vérin à vis.

## Claims

1. Drilling template for a dental implant provided with a positioning member (1), notably for an implant (14) having at least one bore (16b, 17b, 18b) intended to receive a pin (16, 17, 18), said template having means for fixing at least one cylindrical guide channel for the pin in a precise position on a positioning member of this kind, and means for axially positioning said channel relative to a wall of bone receiving an implant pin (16, 17), said axial positioning means comprising at least one elongated part or socket (12), of a specified length, the inner wall of which forms said channel and is movable along its axis in a template body (9), the template body having a fixed vertical part (19) outside the gum and having at least one guide hole (16a, 17a, 18a) for the elongated part or socket (12), such that said elongated part or socket is guided so as to be brought, by a specially adapted end (26), into contact with the wall of bone, **characterised in that** said axial positioning means (12) comprise a knob (21) serving as an abutment for a pin holder (23) in a position such that in the abutment position the pin is embedded precisely in the wall of bone when said end (26) is in contact therewith and **in that** the template body (9) is in the shape of a flat Z.

2. Template according to claim 1, **characterised in that** the cylindrical channel also forms a guide for a drilling tool.

3. Template according to claim 1 or 2, **characterised in that** the end (26) is conical.

4. Template according to one of claims 1 to 3, **characterised in that** the elongated part (12) has a guide channel which is open laterally over part of its length.

5. Template according to one of claims 1 to 4, **characterised in that** the cylindrical channel also forms a guide for a trocar which makes an incision in the gum to allow the elongated part (12) to pass through the gum until it makes contact with the bone.

6. Template according to one of claims 1 to 5, **characterised in that** said elongated part (12) is sufficiently long for the introduction of the various instruments which it guides to take place outside the patient's mouth.

7. Template according to one of claims 1 to 6, **characterised in that** the elongated part (12) has divisions (12a) which make it possible to judge the thickness of the bone to be passed through up to the implant body (14) by referring to a marker (11a) on the template.

8. Template according to one of claims I to 7, **characterised in that** the elongated part (12) has a marker (21a) serving as a reference for measuring the thickness of the bone through which a tool passes, for example the drilling tool (29), from the divisions (29a) marked on this tool.

9. Template according to claim 1, **characterised in that** said abutment (21) is formed by one end of said elongated part (12).

10. Template according to one of claims 1 to 9, **characterised by** means for positioning the template body (9) on the positioning member (1) by sliding it in the axial direction of the implant.

11. Template according to one of claims 1 to 10, **characterised in that** it has means for regulating the position of said channel in a vertical plane of the implant in order to align said channel with at least two implant passages or bores located at different levels.

12. Template according to claim 11, **characterised in that** said elongated part (12) is arranged so as to pivot about a fixed point (M) on the template body (9) remote from the wall of bone, and is then embedded in one or other of at least two passages (16a, 17a, 18a) in the template body which are inclined relative to one another and respectively aligned with the corresponding implant bores.

13. Template according to one of claims 1 to 12, **characterised in that** the lower part (11) acts as a spacer for holding the patient's lip or cheek at a distance.

14. Template according to claim 10, **characterised in that** it comprises three passages (16a, 17a, 18a) in the template body.

15. Template according to one of claims 1 to 14, **characterised in that** the template body (9) is in the form of a flat Z with an upper part comprising the means for placing on and fixing to a positioning member (1), a vertical intermediate part (19) having at least one guide passage (16a, 17a) for the elongated member (12) and a lower part (11) having a pivot point (M) for the elongated member.

16. Template according to one of claims 1 to 15, **characterised in that** it cooperates with a positioning member (1) to enable it to be adjusted into a number of positions in the vertical plane in order to bring said channel of the elongated member (12) into successive alignment with a plurality of implant bores (16a, 17a, 18a) located at different levels.

17. Template according to claim 16, **characterised in that** it cooperates with a wedge (31) for adjusting it on the positioning member.

18. Template according to one of claims 1 to 17, **characterised in that**, for placing it on the positioning member, it has a member which fits without play in an axial hole (6) and in a lateral slot (7) in the positioning member.

19. Template according to one of claims 1 to 18, **characterised in that** the means for attachment to the positioning member (1) are located at a spacing from the bone.

20. Template according to one of claims 1 to 19, **characterised in that** the means for attachment to the positioning member comprise a securing system (10), such as a screw, for example.

21. Template according to one of claims 1 to 20, **characterised in that** it cooperates with a positioning member (1) fixed to the top of the implant (14) in a very precise angular position.

22. Assembly for positioning a dental implant, comprising a template according to one of claims 1 to 21 and a pin holder (23), **characterised in that** the pin holder has an elongated rod (27) which comprises, at a front end, means for temporarily attaching it to the back of a pin (25), and provided with abutment means (24) which can cooperate with an abutment (21) of the axial positioning means of the template for precise axial positioning of the pin.

23. Assembly for positioning a dental implant according to claim 22, **characterised in that** the front end of the pin holder (23) can be screwed into a tapped end (26) of the pin.

24. Assembly according to one of claims 22 or 23, **characterised in that** the pin holder may be temporarily attached, in rotation, to the pin, when the latter has a screw thread adapted to be screwed into tapped hole in the implant.

25. Assembly for positioning a dental implant, comprising a template and a pin holder according to one of claims 1 to 24, and a pin-type extractor (30), **characterised in that** it comprises at least one device for generating a force for pulling apart the abutment means (21), the means (12) for axially positioning the template and the abutment means (24) for the pin holder (23), for example a screw-threaded jack.

## Patentansprüche

1. Bohrschablone für ein Zahnimplantat, das mit einem Positionierelement (1) versehen ist, insbesondere für ein Implantat (14), das wenigstens eine Bohrung (16b, 17b, 18b) aufweist, die dazu bestimmt ist, einen Riegel (16, 17, 18) aufzunehmen, welche Schablone Einrichtungen zur Befestigung in einer genauen Position an einem derartigen Positionierelement, wenigstens einen zylindrischen Kanal zum Führen des Riegels und Einrichtungen zum axialen Positionieren des besagten Kanals bezüglich einer Knochenwand aufweist, die einen Implantatriegel (16, 17) aufnimmt, welche Einrichtungen zum axialen Positionieren wenigstens ein lang gestrecktes Bauelement oder ein Rohrstück (12) mit bestimmter Länge aufweist, dessen Innenwand den Kanal bildet und das längs seiner Achse im Körper der Schablone (9) beweglich ist, wobei der Körper der Schablone einen vertikal festen Teil (19) außen vom Zahnfleisch aufweist, der wenigstens ein Führungsloch (16a, 17a, 18a) für das lang gestreckte Teil oder das Rohrstück (12) zeigt, derart, dass das lang gestreckte Tell oder das Rohrstück so geführt ist, dass es an einem speziell angepassten Ende (26) in einen Kontakt mit der Knochenwand mitgenommen werden kann, **dadurch gekennzeichnet, dass** die besagten Einrichtungen (12) zum axialen Positionieren einen Knopf (21) aufweisen, der als Anschlag für einen Türriegel (23) in einer derartigen Position dient, dass in der Anschlagposition der Riegel genau in die Knochenwand soweit eingeschlagen ist, dass das besagte Ende (26) damit in Kontakt steht, und dass der Körper der Schablone (9) eine flache Z-Form hat.

2. Schablone nach Anspruch 1, **dadurch gekennzeichnet, dass** der zylindrische Kanal gleichfalls die Führung des Bohrwerkzeuges bildet.

3. Schablone nach Anspruch 1 oder Anspruch 2, **dadurch gekennzeichnet, dass** das besagte Ende (26) konisch ist.

4. Schablone nach einem der Ansprüche 1 bis 3, **dadurch gekennzeichnet, dass** das besagte lang gestreckte Teil (12) einen Führungskanal aufweist, der seitlich über einen Teil seiner Länge offen ist.

5. Schablone nach einem der Ansprüche 1 bis 4, **dadurch gekennzeichnet, dass** der zylindrische Kanal gleichfalls eine Führung für eine Punktiernadel bildet, die in das Zahnfleisch einschneidet, um das lang gestreckte Teil (12) quer durch das Zahnfleisch bis in einen Kontakt mit dem Knochen führen zu können,

6. Schablone nach einem der Ansprüche 1 bis 5, **dadurch gekennzeichnet, dass** das besagte lang gestreckte Teil (12) eine Länge hat, die ausreicht, um die verschiedenen Instrumente, die es führt, au-Berhalb des Mundes des Patienten einführen zu können.

7. Schablone nach einem der Ansprüche 1 bis 6, **dadurch gekennzeichnet, dass** das lang gestreckte Teil (12) Unterteilungen (12a) aufweist, die es erlauben, die Dicke des Knochens quer bis zum Körper des Implantats (14) unter Bezug auf ein Zeichen (11a) der Schablone abzuschätzen.

8. Schablone nach einem der Ansprüche 1 bis 7, **dadurch gekennzeichnet, dass** das lang gestreckte Teil (12) eine Markierung (21a) aufweist, die als Bezug dient, um die Dicke des Knochens, durch den ein Werkzeug, beispielsweise ein Bohrwerkzeug (29) geht, ausgehend von Unterteilungen (29a) zu messen, die dieses Werkzeug trägt.

9. Schablone nach Anspruch 1, **dadurch gekennzeichnet, dass** der Anschlag (21) an einem Ende des besagten lang gestreckten Teils (12) ausgebildet ist.

10. Schablone nach einem der Ansprüche 1 bis 9, **gekennzeichnet durch** Einrichtungen zum Anordnen des Körpers der Schablone (9) am Positionierelement (1) **durch** Verschieben in axialer Richtung des Implantates.

11. Schablone nach einem der Ansprüche 1 bis 10, **dadurch gekennzeichnet, dass** sie Einrichtungen zum Einstellen der Position des besagten Kanals in einer vertikalen Ebene des Implantats aufweist, um den besagten Kanal mit wenigstens zwei Kanälen oder Bohrungen des Implantates auszurichten, die sich auf verschiedenen Höhen befinden.

12. Schablone nach Anspruch 11, **dadurch gekennzeichnet, dass** das besagte lang gestreckte Teil (12) so ausgebildet ist, dass es um einen festen Punkt (M) des Körpers der Schablone (9) kippt, der von der Knochenwand entfernt ist, so dass es dann in den einen oder den anderen von wenigstens zwei Kanälen (16a, 17a, 18a) des Körpers der Schablone gedrückt wird, die geneigt zueinander verlaufen und jeweils zu den entsprechenden Bohrungen des Implantats ausgerichtet sind.

13. Schablone nach einem der Ansprüche 1 bis 13, **dadurch gekennzeichnet, dass** der untere Teil (11) als Abstandshalter zum Halten eines Abstandes von der Lippe oder der Wange des Patienten dient.

14. Schablone nach Anspruch 10, **dadurch gekennzeichnet, dass** sie drei Kanäle (16a, 17a, 18a) im Körper der Schablone aufweist.

15. Schablone nach einem der Ansprüche 1 bis 14, **dadurch gekennzeichnet, dass** der Körper der Schablone (9) eine flache Z-Form mit einem oberen Teil, der die Einrichtungen zum Anordnen und Befestigen des Positionierelementes (1) bildet, einem vertikalen Zwischenteil (19), der wenigstens einen Führungskanal (16a, 17a) für das langgestreckte Teil (12) zeigt, und einem unteren Teil (11) hat, der den Punkt M zum Kippen des langgestreckten Teils zeigt.

16. Schablone nach einem der Ansprüche 1 bis 15, **dadurch gekennzeichnet, dass** sie mit einem Positionierelement (1) so zusammenarbeitet, dass sie in mehreren Positionen in der vertikalen Ebene derart eingestellt werden kann, dass der besagte Kanal des langgestreckten Teils (12) in eine Linie nacheinander mit mehreren Bohrungen des Implantats (16b, 17b, 18b) gebracht werden kann, die sich auf verschiedenen Höhen befinden.

17. Schablone nach Anspruch 16, **dadurch gekennzeichnet, dass** sie mit einer Unterlage (31) zum Einstellen am Positionierelement zusammenarbeitet.

18. Schablone nach einem der Ansprüche 1 bis 17, **dadurch gekennzeichnet, dass** sie zur Anordnung am Positionierelement eine Einrichtung aufweist, die ohne Spiel in einem axialen Loch (6) und einem seitlichen Schlitz (7) des Positionierelementes aufgenommen ist,

19. Schablone nach einem der Ansprüche 1 bis 18, **dadurch gekennzeichnet, dass** die Einrichtungen zum Befestigen am Positionierelement (1) sich im Abstand vom Knochen befinden.

20. Schablone nach einem der Ansprüche 1 bis 19, **dadurch gekennzeichnet, dass** die Einrichtungen zum Befestigen am Positionierelement ein Verriegelungssystem (10), beispielsweise eine Schraube umfassen.

21. Schablone nach einem der Ansprüche 1 bis 20, **dadurch gekennzeichnet, dass** sie mit einem Positionierelement (1) zusammenarbeitet, das am Scheitel des Implantats (14) unter einer sehr genauen Winkelposition befestigt ist.

22. Anordnung zum Anbringen eines Zahnimplantats mit einer Schablone nach einem der Ansprüche 1 bis 21 und einem Türriegel (23), **dadurch gekennzeichnet, dass** der Türriegel einen langgestreckten Stiel (27) umfasst, der an seinem vorderen Ende eine Einrichtung zum vorläufigen Befestigen an der Rückseite eines Riegels (25) aufweist und mit einer Anschlageinrichtung (24) versehen ist, die mit einem Anschlag (21) der Einrichtung zum axialen Positionieren der Schablone zusammen arbeiten kann, um den Riegel axial genau zu positionieren.

23. Anordnung zum Anbringen eines Zahnimplantats nach Anspruch 22, **dadurch gekennzeichnet, dass** das vordere Ende des Türriegels (23) in ein mit einem Innengewinde versehenes Ende (26) des Riegels geschraubt werden kann.

24. Anordnung nach einem der Ansprüche 22 bis 23, **dadurch gekennzeichnet, dass** der Türriegel vorläufig drehfest an dem Riegel gehalten sein kann, wenn er ein Gewinde aufweist, das dazu bestimmt ist, in ein Innengewinde des Implantates geschraubt zu werden.

25. Anordnung zum Anbringen eines Zahnimplantats mit einer Schablone und einem Türriegel nach einem der Ansprüche 1 bis 24 und einem Riegelauszieher (30), **dadurch gekennzeichnet, dass** sie wenigstens eine Einrichtung umfasst, die eine Kraft zum Entfernen der Anschlageinrichtung (21), der Einrichtung (12) zum axialen Positionieren der Schablone und der Anschlageinrichtung (24) des Türriegels (23), beispielsweise ein Schraubengewinde umfasst.
